# FASCICULE DE BREVET EUROPEEN

(11) **EP 3 394 845 B1**
(45) Date de publication et mention de la délivrance du brevet: **24.11.2021**
(21) Numéro de dépôt: 16822446.7
(22) Date de dépôt: 19.12.2016
(51) Int. Cl.: G08G 1/16

(54) **PROCEDE DE SIGNALISATION D'UN ACCIDENT PAR UN DRONE DE SIGNALISATION**
VERFAHREN ZUR SIGNALISIERUNG EINES UNFALLS MITTELS EINER SIGNALISIERUNGSDROHNE
PROCESS FOR SIGNALING AN ACCIDENT BY MEANS OF A SIGNALING DRONE

(30) Priorité: 22.12.2015 FR 1563131
(43) Date de publication de la demande: 31.10.2018
(73) Titulaire: BULL SAS, 78340 Les Clayes sous Bois (FR)
(72) Inventeur: ZENG EYINDANGA, Landry Stéphane, 38100 Grenoble (FR); MUBAMU MOMBO, Dany Jonas, GA Libreville (GA); FORMENTIN, Jonathan, 38650 Saint-Michel Les Portes (FR)
(74) Mandataire: Cabinet Camus Lebkiri
(86) Numéro de dépôt international: PCT/EP2016/081727
(87) Numéro de publication internationale: WO 2017/108681

(56) Documents cités:
- FR-A3- 2 986 647
- US-A- 6 084 510
- US-A1- 2015 054 639
- US-A1- 2015 179 062
- US-B1- 9 142 127

## Description

### DOMAINE TECHNIQUE DE L'INVENTION

L'invention se rapporte au domaine général de la sécurité routière. L'invention concerne plus particulièrement un procédé de signalisation d'un accident routier par un drone de signalisation. Le procédé selon l'invention permet d'éviter les sur-accidents et ainsi, il permet de porter secours aux victimes en toute sécurité. En outre, l'invention concerne un drone de signalisation mettant en œuvre ledit procédé.

### ARRIERE PLAN TECHNOLOGIQUE DE L'INVENTION

Devant un accident de la route, le rôle du témoin ou de l'intervenant est fondamental. En effet, arrivé sur le lieu de l'accident, le témoin doit assurer la protection du lieu de l'accident afin d'éviter le sur-accident et ainsi assurer la protection des victimes et des secours.

Pour ce faire, à l'approche du lieu de l'accident, le témoin doit, dans un premier temps, allumer ses feux de détresse et ralentir progressivement tout en vérifiant qu'un autre véhicule n'arrive pas à grande vitesse. Il doit ensuite stationner son véhicule après le lieu de l'accident, idéalement sur la bande d'arrêt d'urgence. Ensuite, le témoin doit porter un vêtement réfléchissant afin qu'il soit visible par les autres véhicules.

Le témoin doit, par la suite, assurer le balisage du lieu de l'accident. Le balisage du lieu de l'accident délimite la zone d'intervention du/des témoin(s) et/ou des secours et constitue une barrière physique de protection pour la victime et/ou les témoins et/ou les secours. Des éléments de balisage présentant des caractéristiques de fluorescence et de rétro-réflexion doivent alors être positionnés à une distance réglementée du lieu de l'accident. Ainsi, les automobilistes sont prévenus de l'obstacle suffisamment à l'avance pour ralentir et/ou s'arrêter si nécessaire et emprunter une autre voie par exemple.

Cependant, assurer le balisage du lieu de l'accident retarde le témoin dans la prise en charge des victimes dont les vies sont en danger.

Le document FR 2 986 647 intitulé « Véhicule automobile associé à un drone d'observation » est connu de l'état de la technique.

### DESCRIPTION GENERALE DE L'INVENTION

Dans ce contexte, l'invention vise à remédier à tout ou partie des inconvénients de l'état de la technique identifiés ci-dessus, notamment en proposant une solution permettant d'assurer automatiquement le balisage du lieu de l'accident de sorte que le premier témoin puisse porter secours aux victimes dès son arrivée sur le lieu de l'accident.

Ainsi, selon un premier aspect, l'invention concerne un procédé de signalisation selon la revendication 1.

Le procédé selon le premier aspect de l'invention permet de résoudre les problèmes préalablement cités.

En effet, dès la localisation du lieu de l'accident, le drone calcule automatiquement une coordonnée d'au moins une position de signalisation qui prend en compte les données relatives au lieu de l'accident. En effet, la localisation du lieu de l'accident permet, par exemple, au drone de déterminer la réglementation applicable dans le lieu de l'accident notamment la distance à laquelle doit être fait le signalement de l'accident aux autres véhicules. Un opérateur arrivant sur le lieu de l'accident ne connait pas forcément la réglementation en vigueur concernant la distance de sécurité à respecter dans la zone géographique où il se trouve.

Une fois la coordonnée de la position de signalisation calculée, le drone se positionne automatiquement selon ladite position de signalisation afin de signaler aux autres véhicules qu'un accident a eu lieu et donc qu'ils doivent ralentir et prendre une autre voie. La signalisation de l'accident aux autres véhicules permet d'éviter le sur-accident et ainsi d'assurer la sécurité de l'opérateur, celle des victimes, des secours ainsi que des automobilistes empruntant la même voie.

Ainsi, alors que le drone procède au balisage du lieu de l'accident, l'opérateur peut secourir les victimes de l'accident sans perdre de temps.

Le procédé selon le premier aspect de l'invention peut également présenter une ou plusieurs des caractéristiques ci-dessous, considérées individuellement ou selon toutes les combinaisons techniquement possibles.

Selon un mode de réalisation non limitatif, les coordonnées du point associé au lieu de l'accident sont acquises par le système de géolocalisation du drone à l'emplacement dans lequel un opérateur a positionné le drone, ledit emplacement étant assimilé au lieu de l'accident via l'activation d'un actionneur dudit drone.

Selon un mode de réalisation non limitatif, le procédé selon le premier aspect de l'invention comporte une reconnaissance du lieu de l'accident par des moyens d'analyse d'image du drone.

En outre, selon un second aspect, l'invention concerne un drone de signalisation mettant en œuvre les étapes du procédé selon le premier aspect de l'invention.

### BREVE DESCRIPTION DES FIGURES

D'autres caractéristiques et avantages de l'invention ressortiront à la lecture de la description qui suit, en référence aux figures annexées qui illustrent :
- à la figure 1, un exemple de balisage du lieu d'un accident selon un mode de réalisation de l'invention,
- à la figure 2, une infrastructure permettant la mise en œuvre de l'invention selon un mode de réalisation,
- à la figure 3, les étapes du procédé de signalisation selon un mode de réalisation de l'invention.

L'invention et ses différentes applications seront mieux comprises à la lecture de la description qui suit et à l'examen des figures qui l'accompagnent. Celles-ci sont présentées à titre d'exemples non limitatifs de l'invention.

### DESCRIPTION DETAILLEE D'AU MOINS UN MODE DE REALISATION DE L'INVENTION

Sauf précision contraire, un même élément apparaissant sur des figures différentes présente une référence unique.

L'invention se rapporte à un procédé PRC de signalisation d'un accident mis en œuvre par au moins un drone de signalisation 4. Par « drone », on entend un dispositif volant sans pilote pouvant transporter une ou plusieurs charge(s) et déposer lesdites charges sur un lieu donné. La taille et la masse de tels drones sont choisies selon les capacités opérationnelles recherchées. Dans le cadre de l'invention, par exemple, la masse du drone 4 est de l'ordre de 8, 5 kg et le drone 4 présente les dimensions suivantes 115x115x70 cm (largeur x longueur x hauteur).

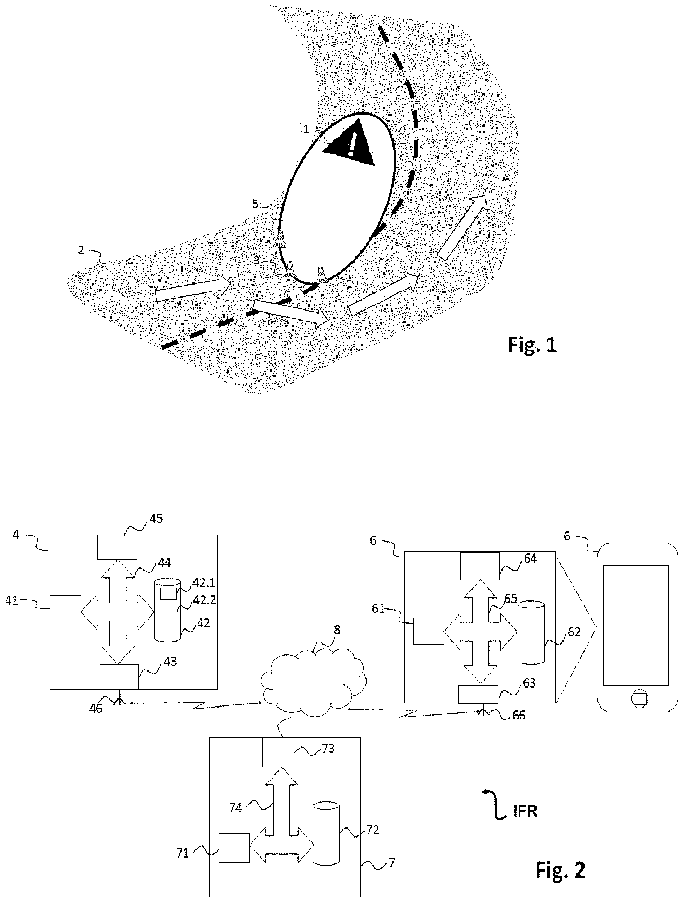

La figure 1 représente un exemple de balisage du lieu d'un accident sur une voie à sens unique.

En référence à la figure 1, le lieu 1 de l'accident survenu sur une voie 2 a été balisé, selon un mode de réalisation. Le balisage a été effectué par le positionnement d'éléments de balisage 3, ici des plots, à des positions de signalisation calculées. Grâce à un tel balisage, des automobilistes empruntant la même voie que celle où a eu lieu l'accident sont prévenus suffisamment à l'avance du lieu 1 de l'accident pour ralentir correctement et ainsi contourner la zone accidentée 5 selon les flèches représentées. Par « zone accidentée », on entend une zone comprenant le lieu 1 de l'accident et qui est délimitée par les positions de signalisation.

La signalisation du lieu 1 de l'accident est mise en oeuvre par une infrastructure IFR représentée à la figure 2.

Le balisage du lieu 1 de l'accident est réalisé par au moins un drone de signalisation 4. En référence à la figure 2, le drone de signalisation 4 de l'infrastructure IFR comporte :
- un microprocesseur 41,
- des moyens de stockage 42,
- une interface de communication 43, par exemple une carte de communication sans fil,
- un système de géolocalisation 45.

Le microprocesseur 41 du drone 4, les moyens de stockage 42 du drone 4, l'interface de communication 43 du drone 4 et le système de géolocalisation 45 du drone 4 sont interconnectés par un bus 44.

On note que par « moyens de stockage », on entend, par exemple, un disque dur, une carte SD, une micro-Sim, etc.

En outre, en référence à la figure 2, les moyens de stockage 42 du drone 4 comportent :
- une première zone 42.1 stockant des données de cartographie routière,
- une deuxième zone 42.2 stockant des codes d'instructions pour la mise en œuvre du procédé PRC selon l'invention.

On note que par « interface de communication sans fil », on entend, par exemple, une interface Wifi, une interface Zigbee etc. En outre, on note que l'interface de communication 43 utilise une antenne 46 du drone 4 pour recevoir ou transmettre des données par ondes radio.

On note également que par « système de géolocalisation », on entend un GPS, un système Galileo etc.

On rappelle que lorsque l'on prête une action à un dispositif celle-ci est en fait effectuée par un microprocesseur du dispositif commandé par des codes instructions enregistrés dans des moyens de stockage du dispositif. De plus, si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de la dite application.

Selon un autre mode de réalisation, l'infrastructure IFR comporte au moins deux drones de signalisation 4.

En outre, selon un mode de réalisation, au moins un opérateur, par exemple un témoin de l'accident, communique avec ledit drone 4 au moyen d'une application exécutée via son terminal 6.

Le terminal 6 de l'infrastructure IFR, qu'il s'agisse d'un ordinateur, d'un téléphone mobile, d'une tablette ou d'un objet connecté, comporte :
- un microprocesseur 61,
- des moyens de stockage 62,
- une interface de communication 63, par exemple une carte de communication sans fil,
- un écran 64.

Le microprocesseur 61 du terminal 6, les moyens de stockage 62 du terminal 6, l'interface de communication 63 du terminal 6 et l'écran 64 du terminal 6 sont interconnectés par un bus 65.

En outre, on note que l'interface de communication 63 utilise une antenne 66 du drone 4 pour recevoir ou transmettre des données par ondes radio.

Par ailleurs, selon un mode de réalisation, l'opérateur communique via son terminal 6 avec au moins un serveur distant 7. Selon un autre mode de réalisation, le drone de signalisation 4 communique avec au moins un serveur distant 7. Selon un autre mode de réalisation, le drone de signalisation 4 et le terminal 6 communiquent avec au moins un serveur distant 7.

En référence à la figure 2, le serveur distant 7 de l'infrastructure IFR, comporte :
- un microprocesseur 71,
- des moyens de stockage 72,
- une interface de communication 73.

Le microprocesseur 71 du serveur distant 7, les moyens de stockage 72 du serveur distant 7 et l'interface de communication 73 du serveur distant 7 sont interconnectés par un bus 74.

Selon un mode de réalisation, le drone de signalisation 4, le terminal 6 et le serveur distant 7 sont interconnectés par un réseau 8, par exemple le réseau Internet. Ce n'est qu'un exemple, un autre cas fréquent est que l'interface de communication 43 du drone de signalisation 4 communique directement avec l'interface de communication 66 du terminal 6 qui lui communique avec l'interface de communication 73 du serveur distant 7.

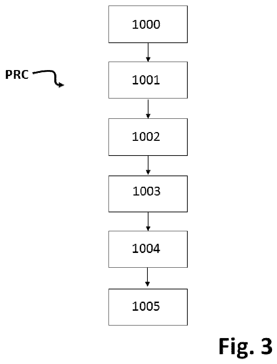

La figure 3 représente des étapes du procédé PRC de signalisation selon un mode de réalisation de l'invention.

Selon une étape préliminaire 1000, le drone de signalisation 4 est configuré selon des données relatives à la zone géographique de l'accident. Par « données relatives à la zone géographique de l'accident », on entend une récupération des informations relatives à la zone géographique (pays, ville, etc.) dans laquelle se trouve ledit drone 4 soit aux alentours, à proximité ou sur le lieu 1 de l'accident. Selon un mode de réalisation, le drone 4 est, au préalable, déverrouillé par l'opérateur au moyen d'un bouton de verrouillage/déverrouillage du drone 4.

La zone géographique dans laquelle se trouve le drone de signalisation 4 est déterminée:
- selon un premier mode de réalisation, par le système de géolocalisation 45 du drone 4,
- selon un deuxième mode de réalisation, par le terminal 6 qui, au moyen d'un système de géolocalisation du terminal 6 transmet au drone 4 la zone géographique dans laquelle il se trouve,
- selon un troisième mode de réalisation, à la suite d'une sélection de ladite zone géographique par l'opérateur via son terminal 6 qui est ensuite transmise au drone 4.

Une fois la zone géographique déterminée, le drone 4 récupère les informations relatives à la zone géographique via :
- selon un premier mode de réalisation, le drone 4 qui comporte lesdites informations dans les moyens de stockage 42 dudit drone 4,
- selon un deuxième mode de réalisation, le terminal 6 qui comporte lesdites informations dans les moyens de stockage 62 dudit terminal 6.
- selon un troisième mode de réalisation, le serveur distant 7 qui comporte lesdites informations dans les moyens de stockage 72 dudit serveur 7.

Selon un mode de réalisation, les données relatives à la zone géographique sont des données de réglementation spécifiques à la zone géographique dans laquelle a eu lieu l'accident. Par « données de réglementation », on entend, par exemple, des distances de signalisation réglementaires qui peuvent varier selon les pays et selon le type de voie (route, autoroute etc.). En France, par exemple, un élément de balisage doit être placé au moins à 30 mètres de l'obstacle de sorte qu'un automobiliste puisse apercevoir l'élément de balisage à 100 mètres. En outre, la distance de signalisation peut varier selon le type de route. Par exemple, en Belgique, pour les routes ordinaires, l'élément de balisage doit être positionné à 30 mètres alors que sur une autoroute, ledit élément doit être placé à 100 mètres du lieu de l'accident.

En outre, selon un autre mode de réalisation, les données relatives à la zone géographique sont une cartographie routière de ladite zone géographique dans laquelle se trouve le drone 6. Par « cartographie routière », on entend une représentation schématique des axes routiers sous forme numérique.

Selon un autre mode de réalisation, les données relatives à la zone géographique sont des données de description de la topographie de ladite zone géographique dans laquelle se trouve le drone 6. Par « topographie » de la zone géographique, on entend des marquages au sol (ligne continue, de dissuasion, d'avertissement, de guidage etc.), le type de revêtement de la voie (béton bitumeux, béton de ciment, pavés, enduits superficiels etc.), des glissières de sécurité, la chaussée etc.

Le déclenchement de la configuration du drone de signalisation 4 selon l'étape préliminaire 1000 est :
- selon un premier mode de réalisation, réalisé par l'opérateur via l'application exécutée sur son terminal 6,
- selon un deuxième mode de réalisation, est automatiquement réalisé par le drone de signalisation 4 dès son allumage.

Une configuration automatique du drone 4 permet de mettre à jour automatiquement des informations relatives à la zone géographique qui sont stockées dans les moyens de stockage 42 du drone 4.

L'étape préliminaire 1000 de configuration du drone de signalisation 4 permet audit drone 4 d'être déjà opérationnel quand il arrive sur les lieux de l'accident. La récupération des informations relatives à la zone géographique peut être effectuée dès que le lieu 1 de l'accident est connu, avant même que le drone 4 ne soit arrivé sur place.

Selon une première étape 1001, une acquisition d'une localisation du lieu 1 de l'accident est effectuée par le drone 4. Par « acquisition d'une localisation », on entend des coordonnées d'un point associé au lieu 1 de l'accident ou une pluralité de cordonnées associées à plusieurs points formant une zone associée au lieu 1 de l'accident.

L'acquisition de la localisation du lieu 1 de l'accident comporte, selon un mode de réalisation, une localisation de l'emplacement dans lequel l'opérateur a positionné le drone 4, ledit emplacement étant assimilé au lieu de l'accident via l'activation d'un actionneur dudit drone 4. Ainsi, lorsque le drone 4 est positionné par l'opérateur sur la route par exemple, à proximité du lieu 1 de l'accident, le drone 4 enregistre ledit emplacement comme correspondant au lieu 1 de l'accident. Selon un mode de réalisation, la localisation de l'emplacement dans lequel l'opérateur a positionné le drone 4 est réalisée au moyen du système de géolocalisation 45 dudit drone 4. L'actionneur permet donc soit de définir un zéro permettant de définir une position relative mise à jour via des accéléromètres soit de lire une valeur du système de géolocalisation 45 pour en faire un point de départ absolu.

Selon un autre mode de réalisation, l'acquisition de la localisation du lieu 1 l'accident comporte une réception de données de localisation transmises par le terminal 6 au drone 4. Par « données de localisation », on entend une ou plusieurs cordonnées associés au lieu de l'accident. En effet, selon un mode de réalisation, l'opérateur sélectionne, via une application dédiée exécutée sur son terminal 6, le lieu 1 de l'accident qui est alors transmis au drone 4 sous forme de données de localisation.

Selon un autre mode de réalisation, la localisation du lieu 1 de l'accident comporte une reconnaissance du lieu 1 de l'accident par des moyens d'analyse d'images du drone 4. Les moyens d'analyse d'image comportent, selon un mode de réalisation, des moyens de capture d'images, par exemple une caméra (spectre visible, IR). Les moyens d'analyse d'images comportent ainsi le microprocesseur 41 du drone 4 et des codes d'instructions enregistrés dans la deuxième zone 42.1 des moyens de stockage 42 du drone 4. Selon un mode de réalisation, les moyens de capture d'images capturent des images dans lesquelles apparaissent, par exemple, des éléments mobiles et immobiles (débris, véhicules, riverains ...). Selon un autre mode de réalisation, lesdits moyens de capture d'images capturent des images dans lesquelles apparaissent, par exemple, divers éléments constituant la voie de circulation (chaussée, accotement, marquage au sol, glissières de sécurité etc.). Les images capturées sont ensuite analysées, selon un mode de réalisation, en procédant à une reconnaissance de forme. Par « reconnaissance de formes » (ou parfois reconnaissance de motifs), on entend un ensemble de techniques et de méthodes visant à identifier des motifs informatiques à partir de données brutes afin de prendre une décision dépendant d'une catégorie attribuée à ce motif. Par exemple, les contours d'un véhicule à l'arrêt, d'une personne à terre seront reconnus par les moyens d'analyse d'images du drone 4 comme étant le véhicule et le corps de la victime. Il en de même lorsqu'il s'agit de reconnaitre des caractéristiques de la voie tels qu'un marquage au sol, une chaussée, un accotement ou encore des glissières de sécurité, les contours desdits éléments étant corrélés à des contours préenregistrés. Selon un mode de réalisation, les contours d'éléments associés à des catégories sont contenus dans les moyens de stockage 42 du drone 4. Selon un autre mode de réalisation, lesdits contours associés à des catégories sont contenus dans les moyens de stockage 72 du service distant 7 et/ou dans les moyens de stockage 62 du terminal 6 qui sont transmis ensuite au drone 4. Dans une variante de réalisation, les captures d'images effectuées par le drone 4 sont transmises pour que le traitement soit effectué à distance par le terminal 6 ou le serveur distant 7. Le drone 4 reçoit donc les résultats du traitement pour la reconnaissance de forme soit avoir à le réaliser lui-même.

On note que, dans une variante, l'étape préliminaire 1000 de configuration du drone 4 est effectuée après la première étape 1001 d'acquisition de la localisation du lieu de l'accident.

Selon une deuxième étape 1002, une coordonnée d'au moins une position de signalisation est calculée. La cordonnée associée à au moins une position de signalisation est calculée selon les coordonnées du lieu 1 de l'accident déterminées lors de la première étape 1001 d'acquisition de la localisation du lieu 1 de l'accident.

Selon un mode de réalisation, le calcul de la coordonnée d'au moins une position de signalisation prend en compte au moins une donnée des données relatives à la zone géographique de l'accident déterminée dans l'étape préliminaire 1000 de configuration du drone 4. En effet, on rappelle que selon notamment le type de voie, la réglementation, la topographie de la voie, les coordonnées de la ou des position(s) à laquelle la signalisation est réalisée varie. Par exemple, la signalisation du lieu de l'accident sur une autoroute doit être réalisée à une distance du lieu de l'accident supérieure à la distance à laquelle doit être réalisée la signalisation sur une route ordinaire.

Dans un exemple de réalisation, la position Pₛ à laquelle doit être effectuée la signalisation du lieu 1 de l'accident correspond à l'intersection entre la route sur laquelle est survenu l'accident et le cercle dont le centre correspond au lieu 1 de l'accident et dont le rayon correspond à la distance réglementaire ds entre le lieu 1 de l'accident et le balisage pour le type de route concerné.

Selon un mode de réalisation, la deuxième étape 1002 comporte le calcul de coordonnées associées à au moins à deux positions Pₛ auxquelles doit être effectuée la signalisation.

Selon une troisième étape 1003, une signalisation de l'accident est effectuée.

Selon un mode de réalisation, la signalisation de l'accident est effectuée en amont du lieu 1 de l'accident selon le sens de la voie. Selon un autre mode de réalisation, la signalisation est effectuée également en aval de l'accident, en particulier lorsque la voie est à double-sens. En outre, selon un mode de réalisation, la signalisation de l'accident est effectuée sur plusieurs voies à sens unique ou sur plusieurs voies à double-sens.

La signalisation de l'accident est réalisée par une combinaison de la localisation du lieu 1 de l'accident déterminée dans la première étape 1001 et des coordonnées de la position de signalisation calculées dans la deuxième étape 1002. Selon un mode de réalisation, la signalisation de l'accident est réalisée par le déploiement d'au moins un élément de balisage. Par « élément de balisage », on entend des éléments présentant des caractéristiques de fluorescence et de rétro-réflexion. Selon un mode de réalisation, l'élément de balisage 3 est un triangle de pré-signalisation. Selon un autre mode de réalisation, l'élément de balisage 3 est un plot. Dans ledit mode de réalisation, le drone 4 transporte au moins un élément de balisage 3 d'un point de départ (coffre d'un véhicule d'intervention, route) à au moins une position de signalisation au moyen d'un porte-balises du drone 4. Dans un autre mode de réalisation, l'élément de balisage 3 est embarqué dans le drone 4, ledit élément de balisage 3 étant retiré et déposé lorsque le drone 4 arrive au niveau de la position de signalisation. Selon un mode de réalisation, la signalisation de l'accident est réalisée par un signal lumineux et/ou sonore émis par ledit au moins un drone 4. L'émission d'un signal lumineux et/ou sonore permet de réduire le délai de prise en compte de l'accident par les automobilistes à l'approche du lieu 1 de l'accident. Selon un mode de réalisation, lorsque la signalisation est réalisée par l'émission d'un signal lumineux, le drone 4 vole de manière stationnaire au niveau de la position de signalisation suffisamment haut pour être visible des véhicules en approche. Selon un mode de réalisation, le signal lumineux est émis sous la forme d'un message visible sur un écran du drone 4. Selon un mode de réalisation le signal lumineux est émis par au moins une diode électroluminescente (LED) du drone 4.

Selon une quatrième étape 1004, la localisation du lieu 1 de l'accident est transmise aux secours et/ou à la gendarmerie/police.

Selon un mode de réalisation, la transmission de la localisation du lieu 1 de l'accident aux secours et/ou à la gendarmerie/police est réalisée automatiquement par le drone 7. Selon un autre mode de réalisation, la transmission de la localisation du lieu 1 de l'accident aux secours et/ou à la gendarmerie/police est réalisée par le terminal 2. On note que dans un mode de réalisation, les données de localisation du lieu 1 de l'accident transmise aux secours correspondent aux données de localisation du lieu 1 de l'accident acquises lors de la première étape 1001.

Selon un mode de réalisation, la transmission de la localisation 1 de l'accident secours et/ou à la gendarmerie/police est accompagnée d'informations relatives à l'état physique de la ou les victimes.

On note que selon un mode de réalisation, la quatrième étape 1004 de transmission de la localisation du lieu 1 de l'accident aux secours est réalisée à la suite de la première étape 1001 d'acquisition de la localisation du lieu 1 de l'accident ou plus généralement dès que les informations requises sont connues.

Selon une cinquième étape 1005, la signalisation du lieu 1 de l'accident par le drone 4 est stoppée.

En effet, lorsque le drone 4 n'est plus utile, ledit drone 4 récupère, selon un mode de réalisation, le(s) élément(s) de balisage 3 et se repositionne à proximité de l'opérateur. Dans un autre mode de réalisation, le drone 4 se repositionne à l'emplacement initial où il avait été positionné par l'opérateur avant la signalisation. Selon un mode de réalisation, le drone 4 est ensuite verrouillé par l'opérateur via le bouton de verrouillage/déverrouillage du drone 4.

Le procédé PRC selon l'invention permet donc de réaliser un balisage automatique et précis du lieu 1 d'un accident ce qui permet à un témoin de porter secours aux victimes dès son arrivée sur ledit lieu 1 de l'accident en toute sécurité. Le procédé PRC permet donc de gagner un temps précieux dans le secours des victimes.

## Revendications

1. Procédé (PRC) de signalisation d'un accident ayant eu lieu dans une zone géographique donnée, mis en œuvre par au moins un drone (4), ledit procédé (PRC) comportant
- une étape d'Acquisition (1001) par le drone (4) de coordonnées d'au moins un point associé à un lieu (1) de l'accident, lesquelles coordonnées forment une localisation dudit lieu (1), les coordonnées du point associé au lieu (1) de l'accident étant acquises via un système de géolocalisation (45) du drone (4) ou reçues d'un terminal (6) via une antenne (46) du drone (4) ;
ledit procédé étant **caractérisé en ce qu'**il comporte les étapes suivantes:
- Calcul par le microprocesseur (41) du drone (4), des coordonnées d'au moins une position (1002) de signalisation, les coordonnées de la position (1002) de signalisation étant calculées à partir des coordonnées du point associé au lieu (1) de l'accident acquises et d'au moins une donnée relative à la zone géographique de l'accident, la donnée relative à la zone géographique de l'accident comprenant une donnée de réglementation spécifique à la zone géographique de l'accident et/ou une cartographie routière de la zone géographique de l'accident et/ou une donnée de description de la topographie de la zone géographique de l'accident ;
- Signalisation de l'accident (1003) mise en œuvre par le drone (4) à la position (1002) de signalisation calculée, la signalisation de l'accident (1003) étant réalisée par le déploiement d'au moins un élément de balisage (3) transporté par le drone (4) ou par l'émission d'un signal lumineux via un écran du drone (4) ou au moins une diode électroluminescente du drone (4).

2. Procédé (PRC) de signalisation selon la revendication 1 **caractérisé en ce que** les coordonnées du point associé au lieu (1) de l'accident sont acquises par le système de géolocalisation (45) du drone (4) à l'emplacement dans lequel un opérateur a positionné le drone (4), ledit emplacement étant assimilé au lieu (1) de l'accident via l'activation d'un actionneur dudit drone (4).

3. Procédé (PRC) de signalisation selon l'une quelconque des revendications 1 ou 2, **caractérisé en ce qu'**il comporte une reconnaissance du lieu (1) de l'accident par des moyens d'analyse d'images du drone (4).

4. Drone de signalisation (4) configuré pour mettre en oeuvre les étapes du procédé (PRC) selon l'une quelconque des revendications 1 à 3, le drone de signalisation (4) comportant :
- un système de géolocalisation (45) configuré pour acquérir les coordonnées d'au moins un point associé à un lieu (1) d'un accident et/ou une antenne (46) configuré pour recevoir les coordonnées du point associé au lieu (1) de l'accident d'un terminal (6) ;
- un microprocesseur (41) configuré pour calculer des coordonnées d'au moins une position (1002) de signalisation à partir des coordonnées du point associé au lieu (1) de l'accident et d'au moins une donnée relative à une zone géographique de l'accident
- un porte-balise ou un écran ou une diode électroluminescente, configuré pour permettre la signalisation de l'accident à la position (1002) de signalisation calculée.

5. Drone de signalisation (4) selon la revendication 4, configuré pour mettre en œuvre les étapes du procédé (PRC) selon la revendication 2, **caractérisé en ce qu'**il comporte en outre un actionneur configuré pour permettre l'assimilation d'un emplacement du drone (4) au lieu de l'accident à son activation.

6. Drone de signalisation (4) selon l'une quelconque des revendications 4 ou 5, configuré pour mettre en œuvre les étapes du procédé (PRC) selon la revendication 3, **caractérisé en ce qu'**il comporte en outre des moyens d'analyse d'images du drone (4) configurés pour reconnaître le lieu (1) de l'accident.

## Patentansprüche

1. Verfahren (PRC) zur Signalisierung eines Unfalls, der in einem bestimmten geografischen Gebiet stattgefunden hat, durchgeführt mittels mindestens einer Drohne (4), wobei das Verfahren (PRC) umfasst:
- einen Schritt der Erfassung (1001) mittels der Drohne (4) von Koordinaten von mindestens einem Punkt, der einem Unfallort (1) zugeordnet ist, wobei die Koordinaten eine Lokalisierung des Ortes (1) bilden, wobei die Koordinaten des dem Unfallort (1) zugeordneten Punktes über ein System zur Geolokalisierung (45) der Drohne (4) erfasst werden oder von einem Endgerät (6) über eine Antenne (46) der Drohne (4) empfangen werden;
wobei das Verfahren **dadurch gekennzeichnet ist, dass** es die folgenden Schritte umfasst:
- Berechnung mittels des Mikroprozessors (41) der Drohne (4) der Koordinaten von mindestens einer Signalisierungsposition (1002), der Koordinaten der Signalisierungsposition (1002), die ausgehend von den erfassten Koordinaten des dem Unfallort (1) zugeordneten Punktes und mindestens von Daten relativ zum geografischen Gebiet des Unfalls berechnet wurden, wobei die Daten relativ zum geografischen Gebiet des Unfalls Daten zu Sonderregelungen zum geografischen Gebiet des Unfalls und/oder eine Straßenkarte des geografischen Gebiets des Unfalls und/oder Daten zur Beschreibung der Topografie des geografischen Gebiets des Unfalls umfassen;
- Signalisierung des Unfalls (1003), durchgeführt mittels der Drohne (4) an der berechneten Signalisierungsposition (1002), wobei die Signalisierung des Unfalls (1003) durch den Einsatz von mindestens einem Markierungselement (3), das von der Drohne (4) transportiert wird, oder durch das Aussenden eines Leuchtsignals über einen Bildschrim der Drohne (4) oder mindestens einer Leuchtdiode der Drohne (4) realisiert wird.

2. Verfahren (PRC) zur Signalisierung nach Anspruch 1, **dadurch gekennzeichnet, dass** die Koordinaten des dem Unfallort (1) zugeordneten Punktes durch das System zur Geolokalisierung (45) der Drohne (4) an dem Standort erfasst werden, an dem ein Bediener die Drohne (4) positioniert hat, wobei der Standort dem Unfallort (1) über die Aktivierung eines Stellglieds der Drohne (4) gleichgestellt wird.

3. Verfahren (PRC) zur Signalisierung nach einem der Ansprüche 1 oder 2, **dadurch gekennzeichnet, dass** es eine Erkennung des Unfallortes (1) durch die Mittel zur Analyse der Bilder der Drohne (4) umfasst.

4. Signalisierungsdrohne (4), die konfiguriert ist, um die Schritte des Verfahrens (PRC) nach einem der Ansprüche 1 bis 3 durchzuführen, wobei die Signalisierungsdrohne (4) umfasst:
- ein System zur Geolokalisierung (45), das konfiguriert ist, um Koordinaten von mindestens einem Punkt, der dem Unfallort (1) zugeordnet ist, zu erfassen, und/oder eine Antenne (46), die konfiguriert ist, um Koordinaten von einem Punkt, der dem Unfallort (1) zugeordnet ist, über ein Endgerät (6) zu empfangen;
- einen Mikroprozessor (41), der konfiguriert ist, um die Koordinaten von mindestens einer Signalisierungsposition (1002) ausgehend von den Koordinaten des Punktes bezüglich des Unfallortes (1) und mindestens von Daten relativ zum geografischen Gebiet des Unfalls zu berechnen
- ein Verkehrszeichen oder einen Bildschirm oder eine Leuchtdiode, die konfiguriert ist, um eine Signalisierung des Unfalls an der berechneten Signalisierungsposition (1002) zu ermöglichen.

5. Signalisierungsdrohne (4) nach Anspruch 4, die konfiguriert ist, um die Schritte des Verfahrens (PRC) nach Anspruch 2 durchzuführen, **dadurch gekennzeichnet, dass** es unter anderem ein Stellglied umfasst, das konfiguriert ist, um das Gleichstellen des Standortes der Drohne (4) mit dem Unfallort bei seiner Aktivierung zu ermöglichen.

6. Signalisierungsdrohne (4) nach einem der Ansprüche 4 oder 5, die konfiguriert ist, um die Schritte des Verfahrens (PRC) nach Anspruch 3 durchzuführen, **dadurch gekennzeichnet, dass** es unter anderem Mittel zur Analyse der Bilder der Drohne (4) umfasst, die konfiguriert sind, um den Unfallort (1) zu erkennen.

## Claims

1. A method (PRC) of signaling an accident that has occurred in a given geographical area, implemented by at least one drone (4), said method (PRC) comprising
- a step of acquisition (1001) by the drone (4) of coordinates of at least one point associated with a location (1) of the accident, coordinates which form a localization of said location (1), the coordinates of the point associated with the location (1) of the accident being acquired via a geolocation system (45) of the drone (4) or received from a terminal (6) via an antenna (46) of the drone (4);
said method being **characterized in that** it comprises the following steps:
- Calculating, by means of the microprocessor (41) of the drone (4), coordinates of at least one signaling position (1002), the coordinates of the signaling position (1002) being calculated based on the coordinates of the point associated with the location (1) of the accident acquired and from at least one datum relating to the geographical area of the accident, the datum relating to the geographical area of the accident comprising a regulatory datum specific to the geographical area of the accident and/or a road map of the geographical area of the accident and/or a datum describing the topography of the geographical area of the accident;
- Signaling (1003) of the accident implemented by the drone (4) at the calculated signaling position (1002), the accident signaling (1003) being carried out by deploying at least one beacon element (3) carried by the drone (4) or by emitting a light signal via a screen of the drone (4) or at least one light-emitting diode of the drone (4).

2. The method (PRC) of signaling according to claim 1, **characterized in that** the coordinates of the point associated with the location (1) of the accident are acquired by the geolocation system (45) of the drone (4) at the site in which an operator had positioned the drone (4), said site being assimilated to the location (1) of the accident via the activation of an actuator of said drone (4).

3. The method (PRC) of signaling according to any one of claims 1 or 2, **characterized in that** it comprises a recognition of the location (1) of the accident by means of analyzing images taken by the drone (4).

4. A signaling drone (4) configured to implement the steps of the method (PRC) according to any one of claims 1 to 3, the signaling drone (4) comprising:
- a geolocation system (45) configured to acquire the coordinates of at least one point associated with a location (1) of an accident and/or an antenna (46) configured to receive the coordinates of the point associated with the location (1) of the accident from a terminal (6);
- a microprocessor (41) configured to calculate coordinates of at least one signaling position (1002) based on the coordinates of the point associated with the location (1) of the accident and of at least one datum relating to a geographical area of the accident
- a beacon holder or a display or a light-emitting diode, configured to enable the signaling of the accident at the calculated signaling position (1002).

5. The signaling drone (4) according to claim 4, configured to implement the steps of the method (PRC) according to claim 2, **characterized in that** it further comprises an actuator configured to enable the assimilation of a site of the drone (4) to the location of the accident upon activation.

6. A signaling drone (4) according to any one of claims 4 or 5, configured to implement the steps of the method (PRC) according to claim 3, **characterized in that** it further comprises means for analyzing images taken by the drone (4) configured to recognize the location (1) of the accident.
